# EUROPÄISCHE PATENTSCHRIFT

(11) **EP 1 170 474 B1**
(45) Veröffentlichungstag und Bekanntmachung des Hinweises auf die Patenterteilung: **21.03.2007**
(21) Anmeldenummer: 01115250.1
(22) Anmeldetag: 23.06.2001
(51) Int. Cl.: F01N 9/00, F01N 3/023, F02D 41/40, F02D 41/02

(54) **Brennkraftmaschine, insbesondere für Kraftfahrzeuge**
Internal combustion engine for vehicle
Moteur à combustion interne pour véhicule

(30) Priorität: 07.07.2000 DE 10033158
(43) Veröffentlichungstag der Anmeldung: 09.01.2002
(73) Patentinhaber: DaimlerChrysler AG, 70567 Stuttgart (DE)
(72) Erfinder: Duvinage, Frank, Dr., 73230 Kirchheim (DE); Nolte, Arno, 70374 Stuttgart (DE); Paule, Markus, 73630 Remshalden (DE); Ruzicka, Norbert, 71144 Steinenbronn (DE)

(56) Entgegenhaltungen:
- EP-A- 0 115 722
- DE-A- 3 304 055
- GB-A- 2 084 898
- US-A- 4 211 075
- US-A- 4 471 611
- US-A- 4 685 290
- US-A- 5 050 376

## Beschreibung

Die Erfindung betrifft eine Brennkraftmaschine, insbesondere für ein Kraftfahrzeug, mit den Merkmalen des Oberbegriffs des Anspruchs 1.

Eine derartige Brennkraftmaschine ist beispielsweise in der US 4 211 075 oder der EP 0 115 722 B1 beschrieben und weist einen Abgasstrang auf, in dem ein regenerierbares Partikelfilter angeordnet ist. Außerdem ist eine Steuerung vorgesehen, die bedarfsabhängig eine Regeneration des Partikelfilters veranlasst. Ein solches Partikelfilter filtert Partikel, insbesondere Ruß, aus den Abgasen der Brennkraftmaschine, insbesondere Dieselmotor, wobei sich diese Partikel im Partikelfilter ablagern und ansammeln. Mit zunehmender Ablagerung verstopft das Partikelfilter zunehmend, so daß von Zeit zu Zeit eine Regeneration des Partikelfilters erforderlich ist. Zur Durchführung einer solchen Regeneration wird bei der bekannten Brennkraftmaschine das Partikelfilter auf eine vorbestimmte Temperatur aufgeheizt, bei der dann die darin gespeicherten Partikel abbrennen.

Die vorliegende Erfindung beschäftigt sich mit dem Problem, für eine Brennkraftmaschine der eingangs genannten Art eine Ausführungsform anzugeben, bei der die Regeneration des Partikelfilters verbessert ist.

Dieses Problem wird erfindungsgemäß durch eine Brennkraftmaschine mit den Merkmalen des Anspruchs 1 gelöst. Demnach ist die Steuerung der Brennkraftmaschine erfindungsgemäß so ausgestaltet, daß sie die Regeneration nur dann startet und weiterführt, wenn sich bestimmte Betriebsparameter und/oder Betriebspunkte der Brennkraftmaschine innerhalb vorbestimmter Bereiche befinden. Entsprechend der hier gewählten Nomenklatur unterscheidet sich ein "Betriebspunkt" von einem "Betriebsparameter" durch seinen mehrdimensionalen Aufbau aus mehreren Betriebsparametern, die ihrerseits eindimensional sind. Beispielsweise können Betriebspunkte in Kennfeldern definiert werden, die aus wenigstens zwei Betriebsparametern aufgebaut sind.

Entsprechend den genannten Merkmalen werden somit für die Regeneration des Partikelfilters zulässige Bereiche für die Betriebsparameter bzw. Betriebspunkte der Brennkraftmaschine definiert, die während einer Regeneration von der Brennkraftmaschine eingehalten werden müssen. Beispielsweise muß die Brennkraftmaschine zumindest einer mittleren Belastung ausgesetzt sein, damit durch geeignete Maßnahmen das Partikelfilter auf die für die Regeneration erforderliche Temperatur aufgeheizt werden kann.

Die Erfindung charakterisiert sich auch dadurch, daß die Steuerung die Regeneration des Partikelfilters in mindestens zwei, zeitlich nacheinander ablaufende Phasen unterteilt, nämlich eine früher ablaufende Heizphase und eine später ablaufende Abbrandphase, wobei die Steuerung die Heizphase nur dann startet und weiterführt, wenn sich bestimmte Betriebsparameter und/oder Betriebspunkte der Brennkraftmaschine innerhalb vorbestimmter erster Bereiche befinden, wobei die Steuerung die Abbrandphase nur dann startet und weiterführt, wenn sich bestimmte Betriebsparameter und/oder Betriebspunkte der Brennkraftmaschine innerhalb vorbestimmter zweiter Bereiche befinden und wobei sich die ersten Bereiche von den zweiten Bereichen unterscheiden.

Die Erfindung beruht hierbei auf dem allgemeinen Gedanken, die Regeneration des Partikelfilters in wenigstens zwei Phasen zu unterteilen, die unabhängig voneinander und anhand unterschiedlicher Kriterien überwacht und gesteuert bzw. geregelt werden können. Für die verschiedenen Zielsetzungen innerhalb der einzelnen Phasen können nun individuelle Parameter verändert und Eingriffe in den Betrieb der Brennkraftmaschine gesteuert oder geregelt werden. Beispielsweise soll während der Heizphase in möglichst kurzer Zeit die Aufheizung des Partikelfilters erreicht werden, wobei dieser Vorgang im wesentlichen unabhängig vom jeweiligen Kraftstoff/Luft-Verhältnis ist. Im Unterschied dazu kommt es bei der Abbrandphase darauf an, eine bestimmte Temperatur zu halten, wobei außerdem ein bestimmter Sauerstoffgehalt im Abgas eingehalten werden muß.

Da die Heizphase der Regeneration einen relativ hohen Energiebedarf aufweist, gibt es Betriebszustände der Brennkraftmaschine, in denen keine ausreichende Aufheizung des Partikelfilters erzielt werden kann. Im Unterschied dazu ist der Energiebedarf für die Abbrandphase deutlich geringer, so daß die genannten Einschränkungen der Betriebszustände, in denen die Abbrandphase ablaufen kann, deutlich geringer sind als bei der Heizphase. Ein Beispiel soll diesen Sachverhalt näher erläutern: Eine Regeneration des Partikelfilters dauert beispielsweise drei Minuten. Um das Partikelfilter auf die für die Regeneration erforderliche Temperatur aufheizen zu können, muß sich die Brennkraftmaschine z.B. zumindest in einem mittleren Lastbereich, jedenfalls außerhalb eines Leerlaufbereichs, befinden. Bei einer Steuerung, die die Regeneration des Partikelfilters als Einheit betrachtet, muß dementsprechend die Brennkraftmaschine während der gesamten Regeneration zumindest in diesem mittleren Lastbereich betrieben werden. Falls die Brennkraftmaschine während der Regenerationszeit in den Leerlaufbetrieb geschaltet wird, muß die Regeneration unterbrochen oder abgebrochen werden. Im Unterschied dazu fordert das Steuergerät bei der Erfindung lediglich für die Heizphase z.B. einen mittleren Lastbereich, während die Abbrandphase auch im Leerlauf der Brennkraftmaschine weitergeführt werden kann. Da die Heizphase zeitlich nur einen relativ kleinen Anteil der Regeneration ausmacht, z.B. 20 Sekunden, wird bei der Erfindung mit einer hohen Wahrscheinlichkeit gewährleistet, daß eine Regeneration des Partikelfilters ohne Unterbrechung vollständig ablaufen kann. Die Qualität der Regeneration ist dadurch reproduzierbar und besonders hoch.

Bei einer bevorzugten Ausführungsform können für die Heizphase andere oder gleiche oder teilweise die selben Betriebsparameter und/oder Betriebspunkte überwacht werden als für die Abbrandphase. Beispielsweise wird während der Heizphase der Sauerstoffgehalt im Abgas nicht berücksichtigt, während bei der Abbrandphase ein vorbestimmter Wert für den Sauerstoffgehalt eingestellt bzw. eingeregelt wird. Ebenso wird beispielsweise die Heizphase nur dann durchgeführt, wenn die Brennkraftmaschine mit einer Last betrieben wird, die größer als die Leerlauflast ist. Im Unterschied dazu kann die Abbrandphase auch dann ablaufen, wenn die Brennkraftmaschine nur mit der Leerlauflast betrieben wird.

Heizphase und Abbrandphase können sich bei weiteren Ausführungsformen durch das jeweils herrschende Kraftstoff/Luft-Verhältnis voneinander unterscheiden.

Sofern die Regeneration mit Hilfe von Nacheinspritzvorgängen realisiert wird, können sich Heizphase und Abbrandphase bei Weiterbildungen der Erfindung z.B. hinsichtlich der Abgasrückführungsrate, des Ladedruckes, des Nacheinspritzbeginns, der Nacheinspritzmenge und/oder der Anzahl an Kraftstoffinjektionen pro Nacheinspritzvorgang voneinander unterscheiden. Diese Variationen sind so gewählt, daß sie während der Heizphase eine rasche Aufheizung des Partikelfilters bewirken und für die Abbrandphase die Aufrechterhaltung der für die Regeneration erforderlichen Temperatur bewirken.

Um die Regeneration des Partikelfilters während der Abbrandphase zu verbessern, können während der Abbrandphase Maßnahmen durchgeführt werden, die zumindest kurzzeitig den Sauerstoffgehalt des Abgases erhöhen. Beispielsweise kann eine ggf. vorhandene Abgasrückführung während der Abbrandphase abgeschaltet werden. Ebenso ist es möglich, während der Abbrandphase einen erhöhten Ladedruck einzustellen. Sofern Nacheinspritzvorgänge zur Realisierung der Regeneration verwendet werden, können die Nacheinspritzvorgänge während der Abbrandphase zur Steigerung des Sauerstoffgehalts im Abgas zumindest kurzzeitig ausgesetzt oder hinsichtlich der Einspritzmenge reduziert werden.

Entsprechend einer besonderen Weiterbildung können auch für die Heizphase und/oder für die Abbrandphase der Regeneration unterschiedliche Bedingungen für deren Start und für deren Weiterführung vorgesehen sein. Es ist klar, daß die für die Weiterführung der Regeneration bzw. der Heizphase bzw. der Abbrandphase vorgesehene Bedingungen implizit auch Bedingungen für eine Beendigung der Regeneration bzw. der Heizphase oder Abbrandphase beeinhalten.

Weitere wichtige Merkmale und Vorteile der Erfindung ergeben sich aus den Unteransprüchen, aus den Zeichnungen und aus der zugehörigen Figurenbeschreibung anhand der Zeichnungen.

Ein bevorzugtes Ausführungsbeispiel der Erfindung ist in den Zeichnungen dargestellt und wird in der nachfolgenden Beschreibung näher erläutert.

Es zeigen, jeweils schematisch,
- Fig. 1: eine schematische Prinzipdarstellung einer Brennkraftmaschine nach der Erfindung,
- Fig. 2: ein Diagramm, in dem der Temperaturverlauf über der Zeit bei einer Regeneration dargestellt ist, und
- Fig. 3: ein Kennfeld zur Veranschaulichung der Bereiche, in denen eine Regeneration durchführbar ist.

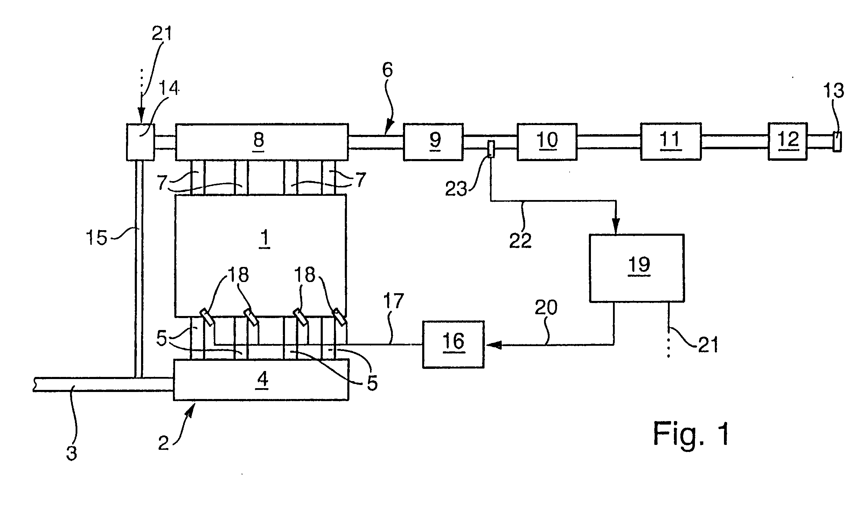

Entsprechend Fig. 1 besitzt eine erfindungsgemäße Brennkraftmaschine 1, die beispielsweise als Dieselmotor ausgebildet ist, einen Ansaugtrakt 2, der aus einer Frischluftzuführungsleitung 3, einem Frischluftsammler 4 und mehreren Ansaugrohren 5 besteht. Die Brennkraftmaschine 1 weist außerdem einen Abgasstrang 6 auf, in den die von der Brennkraftmaschine 1 erzeugten Abgase eintreten. Dabei durchströmen die Abgase nacheinander Abgasrohre 7, einen Abgassammler 8, einen ersten Katalysator 9, ein Partikelfilter 10 sowie ggf. weitere Bestandteile wie einen zweiten Katalysator 11, einen Schalldämpfer 12 und einen Auspuff 13, durch den die Abgase in die Umgebung austreten. Der Katalysator 9 dient hierbei als katalytisch wirkendes Element, das auch auf eine andere Art realisiert sein kann. Das katalytisch wirkende Element, z.B. ein katalytisch beschichteter Bereich, kann ein Bestandteil oder Abschnitt des Partikelfilters 10 bilden. An den Abgassammler 8 des Abgasstrangs 6 kann außerdem ein Abgasrückführungsventil 14 angeschlossen sein, das über eine Abgasrückführungsleitung 15 Abgase in die Frischluftzuführungsleitung 3 einleitet. Die Brennkraftmaschine 1 ist des weiteren mit einer Kraftstoffeinspritzeinrichtung 16 ausgestattet, die beispielsweise über eine Kraftstoffhochdruckleitung 17 (sog. "Common-Rail") einzelne Einspritzventile 18 mit Kraftstoff versorgt. Die Kraftstoffeinspritzeinrichtung 16 ist dabei so ausgebildet, daß sie die einzelnen Einspritzventile 18 einzeln ansteuern kann.

Die Brennkraftmaschine 1 weist eine Steuerung 19 auf, die über Steuerleitungen 20 und 21 die Kraftstoffeinspritzeinrichtung 16 bzw. das Abgasrückführungsventil 14 betätigen kann. Desweiteren erhält die Steuerung 19 beispielsweise über eine Signalleitung 22 Signale eines Temperatursensors 23, der die Abgastemperatur am Eintritt des Partikelfilters 10 ermittelt. Darüber hinaus verfügt die Steuerung 19 über übliche und daher nicht dargestellte Mittel zum Überwachen des Füllungsgrades des Partikelfilters 10. Auf diese Weise kann die Steuerung 19 bedarfsabhängig eine Regeneration des Partikelfilters 10 veranlassen.

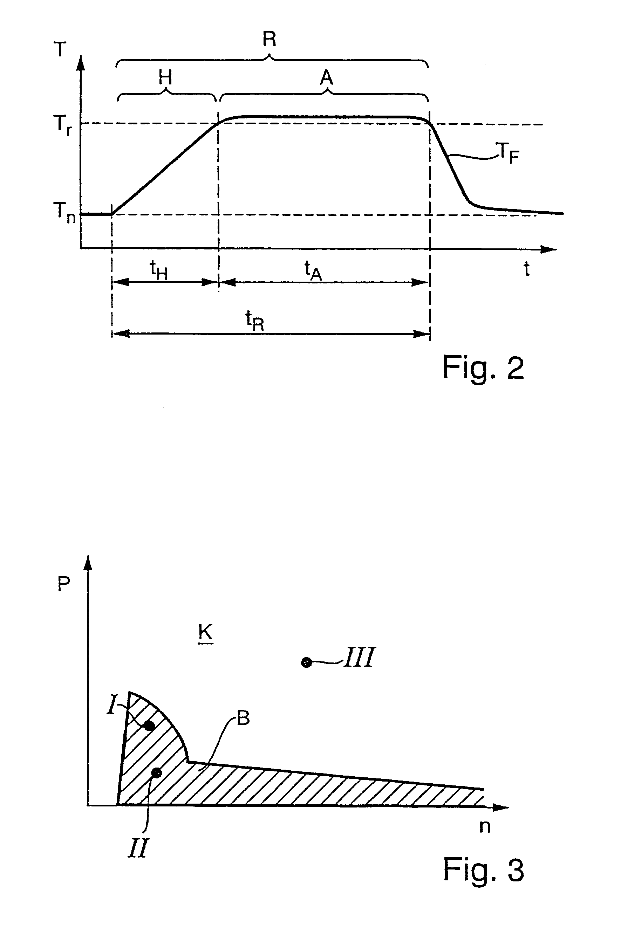

Im Diagramm der Fig. 2 ist der zeitliche Verlauf einer Temperatur T_{F} des Partikelfilters 10 dargestellt, der sich während einer Regeneration am Partikelfilter 10 einstellt. Auf der Abszisse ist die Zeit t aufgetragen, während die Ordinate die Temperatur T wiedergibt. Mit unterbrochenen Linien sind in das Diagramm der Fig. 2 eine Normaltemperatur Tₙ und eine Regenerationstemperatur Tᵣ eingetragen. Die Normaltemperatur Tₙ herrscht im Abgas bei relativ normalen Betriebsbedingungen der Brennkraftmaschine 1. Im Unterschied dazu gibt die Regenerationstemperatur Tᵣ diejenige Temperatur an, die erforderlich ist, damit die Regeneration des Partikelfilters 10 ordnungsgemäß ablaufen kann. Beispielsweise beträgt diese Regenerationstemperatur Tᵣ bei einem als Rußfilter ausgebildeten Partikelfilter 10 etwa 550°C. Sofern keine die Zündtemperatur senkenden Additive verwendet werden.

Während einer Regeneration des Partikelfilters 10 muß somit zunächst die Abgastemperatur T von der Normaltemperatur Tₙ mindestens auf die Regenerationstemperatur Tᵣ angehoben werden. Sobald die Regenerationstemperatur Tᵣ erreicht ist, kann das Abbrennen der Partikel stattfinden. Nach dem Abbrennen der Partikel ist die Regeneration beendet und die Abgastemperatur T kann wieder auf die Normaltemperatur Tₙ abgesenkt werden. In Fig. 2 ist die Regeneration des Partikelfilters 10 mit einer geschweiften Klammer gekennzeichnet und mit R bezeichnet. Eine Regenerationszeit, während der die Regeneration R abläuft, ist in Fig. 2 mit t_{R} bezeichnet.

Erfindungsgemäß unterteilt die Steuerung 19 die Regeneration R in eine Heizphase H und eine Abbrandphase A, die in Fig. 2 ebenfalls durch geschweifte Klammern gekennzeichnet sind. Im vorliegenden Fall grenzen die beiden zeitlich nacheinander ablaufenden Phasen H und A direkt aneinander. Ebenso ist eine Ausführungsform möglich, bei der eine oder mehrere Zwischenphasen vorgesehen sind. In entsprechender Weise sind in Fig. 2 eine Heizzeit t_{H} und eine Abbrandzeit t_{A} eingetragen. Die Heizphase H umfaßt somit denjenigen Abschnitt der Regeneration R in dem die Temperatur T_{F} des Partikelfilters 10 von der Normaltemperatur Tₙ auf die Regenerationstemperatur Tᵣ erhöht wird. Die Abbrandphase A schließt sich an die Heizphase H an. Während der Abbrandphase A ist die Temperatur T_{F} des Partikelfilters 10 im wesentlichen konstant und jedenfalls mindestens so groß wie die Regenerationstemperatur Tᵣ.

In Fig. 3 ist exemplarisch ein Kennfeld K zum Betrieb der Brennkraftmaschine 1 dargestellt. Auf der Abszisse dieses Kennfelds K ist die Motordrehzahl n aufgetragen, während die Ordinate die Motorlast P wiedergibt. In diesem Kennfeld K werden zweidimensionale Betriebspunkte der Brennkraftmaschine 1 durch die beiden Betriebsparameter Drehzahl n und Last P definiert. Im Kennfeld K ist ein schraffierter Bereich B eingetragen. Dieser Bereich B charakterisiert Betriebspunkte der Brennkraftmaschine, bei denen eine Aufheizung des Partikelfilters 10 auf die Regenerationstemperatur Tᵣ mit motorischen Mitteln nicht möglich ist. Beispielsweise liegen zwei Betriebspunkte I und II innerhalb dieses unzulässigen Bereichs B, während hier exemplarisch ein Betriebspunkt III außerhalb des unzulässigen Bereichs B und somit innerhalb eines zulässigen Bereiches des Kennfeldes K liegt.

Wenn die Steuerung 19 die Regeneration R als Einheit behandelt, kann die Regeneration des Partikelfilters 10 nur dann gestartet und aufrechterhalten werden, solange sich der aktuelle Betriebszustand der Brennkraftmaschine 1 innerhalb des zulässigen Bereichs, also außerhalb des unzulässigen Bereiches B, befindet. Dementsprechend kann gemäß Fig. 3 die Regeneration R in den Betriebspunkten I und II nicht durchgeführt werden, sondern nur im Betriebspunkt III. Wenn die Steuerung 19 jedoch entsprechend der Erfindung die Regeneration R in die Heizphase H und die Abbrandphase A unterteilt, und diesen Phasen H und A unterschiedliche Zulässigkeitsbereiche für die Betriebspunkte zuordnet, muß beispielsweise das Kennfeld K nur für die Heizphase H berücksichtigt werden, während die Abbrandphase A z.B. unabhängig vom Kennfeld K ablaufen kann. Dementsprechend kann zwar die Heizphase H nur im zulässigen Bereich, also außerhalb des unzulässigen Bereiches B durchgeführt werden, jedoch kann die Abbrandphase A durchaus auch in dem für die Heizphase H unzulässigen Bereich B ablaufen.

Beispielsweise kann im Betriebspunkt I die Regeneration R nicht gestartet werden, da der Betriebspunkt I im unzulässigen Bereich B liegt. Jedoch kann die Regeneration R im Betriebspunkt III gestartet werden, wobei sich der Betriebszustand der Brennkraftmaschine 1 nur während der Heizphase H in diesem zulässigen Bereich befinden muß, um die Heizphase H erfolgreich zu beenden. Sobald die Heizphase H erfolgreich beendet ist, kann die Brennkraftmaschine 1 grundsätzlich auch in einem Betriebspunkt betrieben werden, der in dem für die Heizphase H unzulässigen Bereich B liegt, z.B. kann die Abbrandphase A im Betriebspunkt II ablaufen. Da die Heizzeit t_{H} erheblich kleiner ist als die Abbrandzeit t_{A} ist die Wahrscheinlichkeit, daß sich die Betriebszustände der Brennkraftmaschine 1 während der Heizzeit t_{H} in einem zulässigen Bereich befinden, relativ hoch. Somit erhöht sich die Sicherheit, mit der eine vollständige Regeneration R des Partikelfilters 10 gewährleistet werden kann.

Durch die Aufspaltung der Regeneration R zumindest in die Heizphase H und die Abbrandphase A wird außerdem die Möglichkeit geschaffen, den Motorbetrieb während der Heizphase H anders zu gestalten als während der Abbrandphase A. Dementsprechend kann durch geeignete Maßnahmen besonders rasch die Regenerationstemperatur Tᵣ erreicht werden. Ebenso kann ein besonders intensiver und qualitativ hochwertiger Abbrand während der Abbrandphase A durch die Einstellung eines geeigneten Motorbetriebs erreicht werden. Da für die Heizphase H und die Abbrandphase A unterschiedliche Bereiche und Bereichsgrenzen der Betriebsparameter bzw. Betriebspunkte der Brennkraftmaschine berücksichtigt werden müssen, kann in den einzelnen Phasen H und A der Motorbetrieb gezielter auf die Funktion der jeweiligen Phase abgestimmt werden.

Entsprechend Fig. 1 veranlaßt die Steuerung 19 eine Regeneration des Partikelfilters 10 dadurch, daß die Steuerung 19 die Kraftstoffeinspritzeinrichtung 16 zur Durchführung von Nacheinspritzvorgängen betätigt. Hierdurch kann einerseits die Abgastemperatur erhöht werden, andererseits werden die Abgase der Brennkraftmaschine 1 dadurch mit unverbranntem Kraftstoff angereichert, der im entsprechend ausgebildeten ersten Katalysator 9 eine exotherme chemische Reaktion auslöst und eine weitere Temperatursteigerung der Abgase bewirkt. Da während der Heizphase H im Partikelfilter 10 kein Sauerstoff benötigt wird, können relativ große Kraftstoffmengen nachgespritzt werden, wodurch die Temperatur T_{F} des Partikelfilters 10 rasch erhöht wird. Während der Abbrandphase A wird jedoch Sauerstoff benötigt, so daß die Nacheinspritzmenge reduziert werden kann. Außerdem muß während der Abbrandphase A lediglich das Temperaturniveau des Partikelfilters 10 gehalten werden, so daß auch deshalb die Nacheinspritzmenge reduziert werden kann. Um den Sauerstoffanteil in den dem Partikelfilter 10 zugeführten Abgasen weiter zu erhöhen, kann während der Abbrandphase A beispielsweise der Ladedruck erhöht und/oder die Abgasrückführung 14, 15 reduziert oder abgeschaltet werden. Außerdem kann kurzzeitig die Nacheinspritzung unterbrochen oder bezüglich ihrer Einspritzmenge reduziert werden, wodurch kurzzeitig ein sehr hoher Sauerstoffanteil zum Partikelfilter 10 gelangt.

## Patentansprüche

1. Brennkraftmaschine, mit einem Abgasstrang (6), in dem ein regenerierbares Partikelfilter (10) angeordnet ist, und mit einer Steuerung (19), die bedarfsabhängig eine Regeneration (R) des Partikelfilters (10) veranlasst, wobei die Steuerung (19) die Regeneration (R) in mindestens zwei, zeitlich nacheinander ablaufende Phasen unterteilt, nämlich eine früher ablaufende Heizphase (H) und eine später ablaufende Abbrandphase (A), wobei die Steuerung (19) die Regeneration nur dann startet und weiterführt, wenn sich bestimmte Betriebsparameter und/oder Betriebspunkte der Brennkraftmaschine (1) innerhalb vorbestimmter Bereiche befinden,
**dadurch gekennzeichnet, dass**
- für einen Start und eine Weiterführung der Heizphase (H) ein hierfür zulässiger erster Bereich im Last-Drehzahlkennfeld der Brennkraftmaschine (1) vorgegeben ist und
- für einen Start und eine Weiterführung der Abbrandphase (A) ein hierfür zulässiger zweiter Bereich im Last-Drehzahlkennfeld der Brennkraftmaschine (1) vorgegeben ist,
wobei der zweite Bereich gegenüber dem ersten Bereich zu kleineren Lasten und/oder Drehzahlen ausgedehnt ist.

2. Brennkraftmaschine nach Anspruch 1,
**dadurch gekennzeichnet, dass**
der für die Abbrandphase (A) vorgegebene zweite Bereich Leerlaufbetriebspunkte der Brennkraftmaschine (1) umfasst.

3. Brennkraftmaschine nach Anspruch 1 oder 2,
**dadurch gekennzeichnet, dass**
für die Heizphase (H) andere oder gleiche oder teilweise dieselben Betriebsparameter und/oder Betriebspunkte überwacht werden als für die Abbrandphase (A).

4. Brennkraftmaschine nach einem der Ansprüche 1 bis 3,
**dadurch gekennzeichnet, dass**
die Steuerung (19) für die Heizphase (H) die Brennkraftmaschine (1) mager, stöchiometrisch oder fett betreibt und daß die Steuerung (19) für die Abbrandphase (A) die Brennkraftmaschine (1) mager betreibt.

5. Brennkraftmaschine nach einem der Ansprüche 1 bis 4,
**dadurch gekennzeichnet, dass**
die Steuerung (19) für die Regeneration (R) eine Kraftstoffeinspritzeinrichtung (16) der Brennkraftmaschine (1) zur Durchführung von Nacheinspritzvorgängen betätigt, wobei die Steuerung (19) für die Heizphase (H) den Nacheinspritzbeginn früher wählt als für die Abbrandphase (A).

6. Brennkraftmaschine nach einem der Ansprüche 1 bis 5,
**dadurch gekennzeichnet, dass**
die Steuerung (19) für die Regeneration (R) eine Kraftstoffeinspritzeinrichtung (16) der Brennkraftmaschine (1) zur Durchführung von Nacheinspritzvorgängen betätigt, wobei die Steuerung für die Heizphase (H) die Nacheinspritzmenge unterschiedlich wählt als für die Abbrandphase (A).

7. Brennkraftmaschine nach einem der Ansprüche 1 bis 6,
**dadurch gekennzeichnet, dass**
die Steuerung (19) für die Regeneration (R) eine Kraftstoffeinspritzeinrichtung (16) der Brennkraftmaschine (1) zur Durchführung von Nacheinspritzvorgängen betätigt, wobei die Steuerung (19) die Nacheinspritzvorgänge so wählt, daß die Nacheinspritzvorgänge für die Heizphase (H) mehr Kraftstoffinjektionen aufweisen als für die Abbrandphase (A).

8. Brennkraftmaschine nach einem der Ansprüche 1 bis 7,
**dadurch gekennzeichnet, dass**
die Steuerung (19) für die Abbrandphase (A) eine Abgasrückführung (14, 15) der Brennkraftmaschine (1) reduziert oder abschaltet, die für die Heizphase (H) eingeschaltet sein kann.

9. Brennkraftmaschine nach einem der Ansprüche 1 bis 8,
**dadurch gekennzeichnet, dass**
die Steuerung (19) für die Abbrandphase (A) einen höheren Ladedruck einstellt als für die Heizphase (H).

10. Brennkraftmaschine nach einem der Ansprüche 1 bis 9,
**dadurch gekennzeichnet, dass**
die Steuerung (19) für die Regeneration eine Kraftstoffeinspritzeinrichtung (16) der Brennkraftmaschine (1) zur Durchführung von Nacheinspritzvorgängen betätigt, wobei die Steuerung während der Abbrandphase (A) die Nacheinspritzvorgänge kurzzeitig aussetzt oder hinsichtlich der Einspritzmenge reduziert.

## Claims

1. Internal combustion engine with an exhaust gas system (6), in which a regenerable particle filter (10) is arranged, and with a control (19) which triggers, according to requirements, a regeneration (R) of the particle filter (10) wherein the control (19) divides the regeneration (R) into at least two phases running one after the other, namely an earlier heating phase (H) and a later burn-off phase (A), wherein the control (19) only starts and continues the regeneration if certain operating parameters and / or operating points of the internal combustion engine (1) are within predetermined ranges,
**characterised in that**
- for a start and continuation of the heating phase (H) a first range admissible for this is pre-specified in the load / speed characteristic field of the internal combustion engine (1) and
- for a start and continuation of the burn-off phase (A) a second range admissible for this is pre-specified in the load / speed characteristic field of the internal combustion engine (1),
wherein the second range is extended in relation to the first range to lower loads and / or speeds.

2. Internal combustion engine according to claim 1,
**characterised in that**
the second range pre-specified for the burn-off phase (A) comprises idling operation points of the internal combustion engine (1).

3. Internal combustion engine according to claim 1 or 2,
**characterised in that**
operating parameters and / or operating points are monitored for the heating phase (H) which are different or the same or partially the same as for the burn-off phase (A).

4. Internal combustion engine according to one of the claims 1 to 3,
**characterised in that**
the control (19) operates the internal combustion engine (1) in lean, stoichiometric or rich operation for the heating phase (H) and **in that** the control (19) operates the internal combustion engine (1) in lean operation for the burn-off phase (A).

5. Internal combustion engine according to one of the claims 1 to 4,
**characterised in that**
for the regeneration (R), the control (19) actuates a fuel injection device (16) of the internal combustion engine (1) for the implementation of after-injection processes, whereby, for the heating phase (H), the control (19) selects the after-injection start earlier than for the burn-off phase (A).

6. Internal combustion engine according to one of the claims 1 to 5,
**characterised in that**
for the regeneration (R), the control (19) actuates a fuel injection device (16) of the internal combustion engine (1) for the implementation of after-injection processes, whereby, for the heating phase (H), the control selects the after-injection amount to be different from that of the burn-off phase.

7. Internal combustion engine according to one of the claims 1 to 6,
**characterised in that**
for the regeneration (R), the control (19) actuates a fuel injection device (16) of the internal combustion engine (1) for the implementation of after-injection processes, whereby the control (19) selects the after-injection processes in such a way that the after-injection processes for the heating phase (H) comprise more fuel injections than for the burn-off phase (A).

8. Internal combustion engine according to one of the claims 1 to 7,
**characterised in that**
for the burn-off phase (A), the control (19) reduces or switches off an exhaust gas recirculation (14, 15) of the internal combustion engine (1) which can be switched on for the heating phase (H).

9. Internal combustion engine according to one of the claims 1 to 8,
**characterised in that**
the control (19) sets a higher boost pressure for the burn-off phase (A) than for the heating phase (H).

10. Internal combustion engine according to one of the claims 1 to 9,
**characterised in that**
for the regeneration, the control (19) actuates a fuel injection device (16) of the internal combustion engine (1) for the implementation of after-injection processes, whereby, during the burn-off phase (A), the control interrupts the after-injection processes in the short term or reduces the injection amount thereof.

## Revendications

1. Moteur à combustion interne comportant un circuit à gaz d'échappement (6) dans lequel est agencé un filtre à particules (10) régénérable, et comportant une commande (19) qui, en fonction des besoins, provoque une régénération (R) du filtre à particules (10), la commande (19) subdivisant la régénération (R) en au moins deux phases qui se déroulent successivement dans le temps, que sont une phase de chauffage (H) qui se déroule plus tôt et une phase de combustion (A) qui se déroule plus tard, la commande (19) démarrant et continuant la régénération uniquement lorsque des paramètres de fonctionnement déterminés et/ou des points de fonctionnement du moteur à combustion interne (1) se situent à l'intérieur de plages prédéterminées,
**caractérisé en ce que**
- pour démarrer et continuer la phase de chauffage (H), on définit une première plage admissible à cet effet dans le champ caractéristique de vitesse de rotation sous charge du moteur à combustion interne (1), et
- pour démarrer et continuer la phase de combustion (A), on définit une seconde plage admissible à cet effet dans le champ caractéristique de vitesse de rotation sous charge du moteur à combustion interne (1),
la seconde plage étant élargie par rapport à la première plage vers des charges et/ou des vitesses de rotation plus petites.

2. Moteur à combustion interne selon la revendication 1,
**caractérisé en ce que**
la seconde plage définie pour la phase de combustion (A) comprend des points de fonctionnement au ralenti du moteur à combustion interne (1).

3. Moteur à combustion interne selon la revendication 1 ou 2,
**caractérisé en ce que**
pour la phase de chauffage (H), on surveille d'autres ou les mêmes ou partiellement les mêmes paramètres de fonctionnement et/ou points de fonctionnement que pour la phase de combustion (A).

4. Moteur à combustion interne selon l'une des revendications 1 à 3,
**caractérisé en ce que**
pour la phase de chauffage (H), la commande (19) fait fonctionner le moteur à combustion interne (1) en régime pauvre, stoechiométrique ou riche, et **en ce que** pour la phase de combustion (A), la commande (19) fait fonctionner le moteur à combustion interne (1) en régime pauvre.

5. Moteur à combustion interne selon l'une des revendications 1 à 4,
**caractérisé en ce que**
pour la régénération (R), la commande (19) actionne un dispositif d'injection de carburant (16) pour le moteur à combustion interne (1) pour exécuter des opérations de post-injection, la commande (19) choisissant le début de la post-injection pour la phase de chauffage (H) plus tôt que pour la phase de combustion (A).

6. Moteur à combustion interne selon l'une des revendications 1 à 5,
**caractérisé en ce que**
pour la régénération (R), la commande (19) actionne un dispositif d'injection de carburant (16) pour le moteur à combustion interne (1) pour exécuter des opérations de post-injection, la commande choisissant la quantité de la post-injection pour la phase de chauffage (H) différente de celle pour la phase de combustion (A).

7. Moteur à combustion interne selon l'une des revendications 1 à 6,
**caractérisé en ce que**
pour la régénération (R), la commande (19) actionne un dispositif d'injection de carburant (16) pour le moteur à combustion interne (1) pour exécuter des opérations de post-injection, la commande (19) choisissant les opérations de post-injection de telle sorte que les opérations de post-injection pour la phase de chauffage (H) présentent plus d'injections de carburant que pour la phase de combustion (A).

8. Moteur à combustion interne selon l'une des revendications 1 à 7,
**caractérisé en ce que**
pour la phase de combustion (A), la commande (19) réduit ou coupe une recirculation de gaz d'échappement (14, 15) du moteur à combustion interne (1), qui peut être mise en marche pour la phase de chauffage (H).

9. Moteur à combustion interne selon l'une des revendications 1 à 8,
**caractérisé en ce que**
pour la phase de combustion (A), la commande (19) règle une pression de charge supérieure à celle pour la phase de chauffage (H).

10. Moteur à combustion interne selon l'une des revendications 1 à 9,
**caractérisé en ce que**
pour la régénération, la commande (19) actionne un dispositif d'injection de carburant (16) pour le moteur à combustion interne (1) pour exécuter des opérations de post-injection, la commande suspendant brièvement les opérations de post-injection ou les réduisant pour ce qui concerne la quantité d'injection, pendant la phase de combustion (A).
